# EUROPÄISCHE PATENTANMELDUNG

(11) **EP 0 919 786 A1**
(43) Veröffentlichungstag der Anmeldung: **02.06.1999**
(21) Anmeldenummer: 97121070.3
(22) Anmeldetag: 01.12.1997
(51) Int. Cl.: G01C 9/28, H01F 7/04, B23Q 3/154

(54) **Wasserwaage**

(71) Anmelder: Stabila-Messgeräte Gustav Ullrich GmbH & Co.KG, D-76855 Annweiler am Trifels (DE)
(72) Erfinder: Von Wedemeyer, Peter, Dipl.-Ing., D-76855Annweiler am Trifels (DE)
(74) Vertreter: Patentanwälte Möll und Bitterich

(57) **Zusammenfassung**

Um eine Wasserwaage (1) lösbar an einem Meßobjekt befestigen zu können, ist ein Haftkraft erzeugendes, oberflächenschonendes Element (10) in Form eines Permanentmagneten oder eines Unterdruck-Saugers vorgesehen. Das Element (10) ist mittels einer Feder in einem Ausschnitt (13) der Wasserwaage (1) befestigt. In der Ruheposition positioniert die Feder das Element (10) mit Abstand zum Meßobjekt. Mit Hilfe eines Handgriffs (11) kann das Element (10) aktiviert werden.

## Beschreibung

Die Erfindung betrifft Wasserwaagen mit einer Vorrichtung zum lösbaren Befestigen derselben an einem Meßobjekt.

Die klassische Wasserwaage besitzt ein langgestrecktes, parallelepipedisches Gehäuse, meist aus einem Aluminium-Strangpreßprofil. Eine Längsseite des Gehäuses bildet die sogenannte Meßsohle. In entsprechende Ausschnitte des Gehäuses sind meist zwei zur Meßsohle justierte Libellen eingesetzt. Die offenen Enden des Gehäuseprofils sind mit Endkappen aus Gummi oder Kunststoff verschlossen.

Seit es Wasserwaagen gibt, besteht seitens der Anwender der Wunsch, diese an dem Meßobjekt zeitweise fixieren zu können. Hierzu gibt es bereits verschiedene Lösungen.

Eine erste Lösung besteht aus Stahlstiften, die in die Unterlage eingedrückt werden. Dabei wird das Meßobjekt beschädigt.

Eine zweite Lösung verwendet Permanentmagnete, die natürlich nur an ferromagnetischen Unterlagen haften. Dabei gibt es zwei Konstruktionsvarianten. Bei der einen Variante ist der Permanentmagnet in die Meßsohle integriert und mit dieser plan justiert. Dies ist einigermaßen aufwendig. Auch läßt sich die Wasserwaage nur schwer exakt positionieren, weil der Magnet eine große Haftkraft erzeugt. Bei der anderen Variante stützt sich der Magnet bzw. das Magnetgehäuse an der Profilinnenkante ab, was aufgrund der Profiltoleranzen zu starker Schwankung der Haltekräfte führt.

Der vorliegenden Erfindung liegt die Aufgabe zugrunde, eine Wasserwaage anzugeben, die einfach und preiswert hergestellt werden kann und die mit großer Haftkraft, aber lösbar an der Oberfläche von Meßobjekten befestigbar ist.

Diese Aufgabe wird gelöst durch eine Wasserwaage mit den Merkmalen des Anspruchs 1.

Dank der Befestigung des die Haftkraft erzeugenden Elementes an einer Feder entfallen jegliche Justierarbeiten. Gleichzeitig läßt sich das die Haftkraft erzeugende Element stets in unmittelbaren Kontakt mit der Oberfläche bringen, an der die Wasserwaage haften soll, so daß die Haftkraft maximal ist.

Gemäß einer ersten Variante der Erfindung handelt es sich bei dem die Haftkraft erzeugenden, oberflächenschonenden Element um einen Permanentmagneten. Dieser besitzt im inaktivierten Zustand einen Abstand zum Meßobjekt, so daß die Wasserwaage kräftefrei positioniert werden kann. Erst wenn die Wasserwaage ihre endgültige Lage erreicht hat, wird der Permanentmagnet aktiviert.

Gemäß einer zweiten, bevorzugten Ausgestaltung der Erfindung ist das die Haftkraft erzeugende Element ein Unterdruck-Sauger, vorzugsweise ein Hebelsauger. Ein solcher Sauger haftet nicht nur an ferromagnetischen Materialien, sondern an beliebigen Unterlagen, vorausgesetzt, daß deren Oberfläche so glatt ist, daß der Sauger haftet. Die bekannten Permanentmagnete, eingebaut im Inneren des Wasserwaagengehäuses, lassen sich auch weiterhin verwenden.

Insgesamt ist das Anwendungsspektrum der erfindungsgemäßen Wasserwaage weit größer als bisher, wobei gleichzeitig eine Beschädigung der Oberfläche des Meßobjektes ausscheidet.

Gemäß einer bevorzugten Ausgestaltung der Erfindung besitzt die Wasserwaage bzw. deren Gehäuse einen Ausschnitt für das Element.

Das Element selbst ist vorzugsweise mit einem Handgriff ausgerüstet, wobei der Handgriff von der Außenseite der Wasserwaage aus zu betätigen ist.

Vorzugsweise dient der Handgriff gleichzeitig als Führung, so daß die Bewegungen des Elementes definiert sind.

Die Feder, die bei aktiviertem Element die Wasserwaage gegen die Unterlage drückt, läßt sich je nach den räumlichen Gegebenheiten in den unterschiedlichsten Varianten ausführen. Brauchbar sind Blattfedern, Balkenfedern, Schraubenfedern, auch Gummischnüre.

Gemäß einer Weiterbildung der Erfindung bestehen die Federn aus einem Kunststoff.

Anhand der Zeichnung soll die Erfindung in Form von Ausführungsbeispielen näher erläutert werden. Es zeigen
- Fig. 1: eine perspektivische Darstellung einer Wasserwaage mit Unterdruck-Sauger,
- Fig. 2: ausschnittsweise eine Ansicht der Wasserwaage der Fig. 1 mit deaktiviertem Sauger,
- Fig. 3: ausschnittsweise eine Ansicht der Wasserwaage der Fig. 1 mit aktiviertem Sauger,
- Fig. 4: einen Längsschnitt durch eine Wasserwaage mit einem Permanentmagneten und einer anderen Feder und
- Fig. 5: einen Längsschnitt durch eine Wasserwaage mit einem Permanentmagneten und einer dritten Feder.

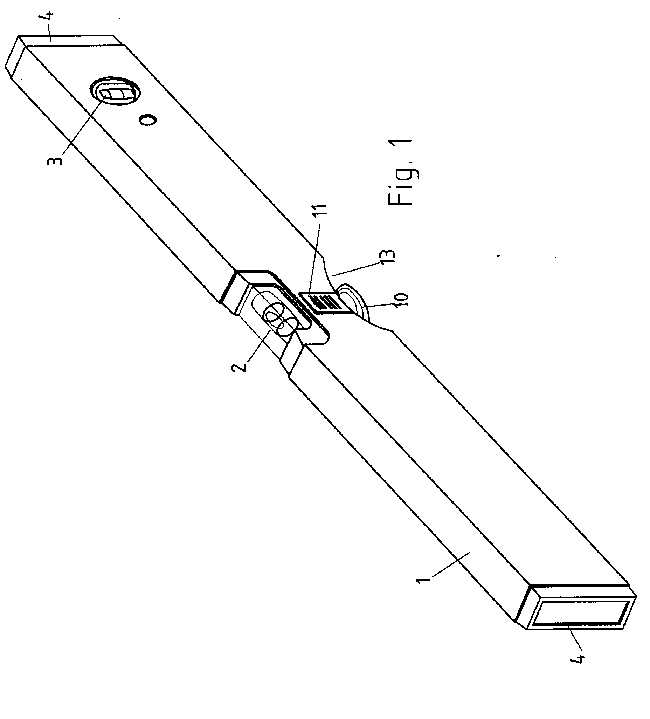

Fig. 1 zeigt in perspektivischer Darstellung eine typische Wasserwaage mit einem langgestreckten parallelepipedischen Gehäuse 1 aus einem Aluminium-Strangpreßprofil. In das Gehäuse 1 sind zwei Libellen 2, 3 in der bekannten Art und Weise eingesetzt. Elastische Endkappen 4 verschließen das Gehäuse 1.

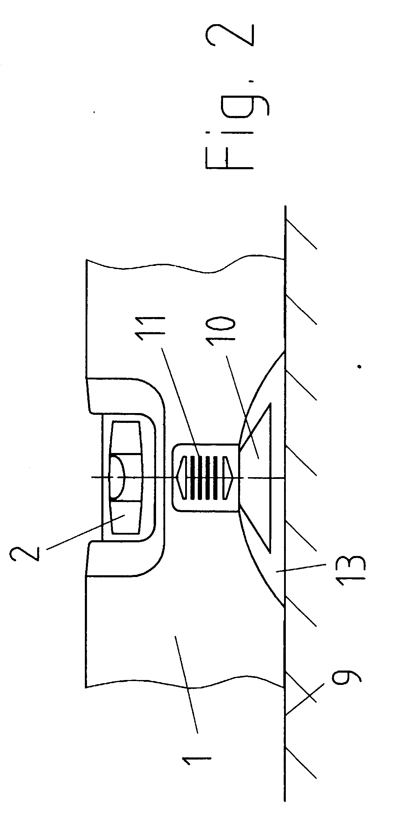

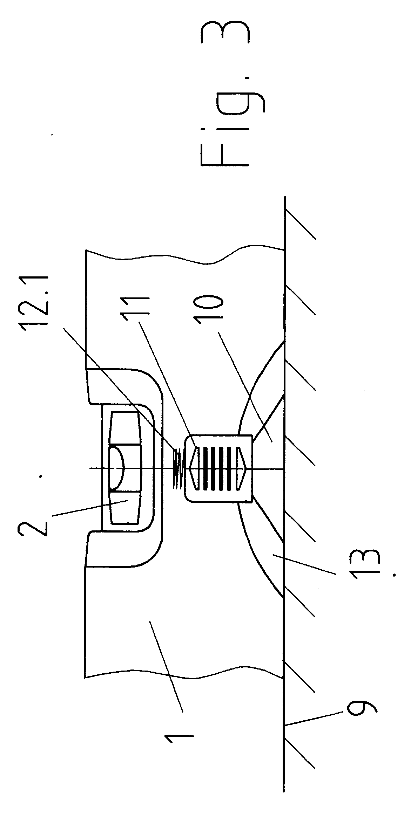

Im Bereich der Meßsohle besitzt das Gehäuse 1 einen Ausschnitt 13, in dem ein Vakuum-Sauger 10 untergebracht ist. Dem Sauger 10 ist ein Handgriff 11 zugeordnet. Nähere Einzelheiten ergeben sich aus den Fig. 2 und 3.

Fig. 2 zeigt ausschnittsweise das Gehäuse 1 der Wasserwaage nach Fig. 1 als Seitenansicht. Unter der Libelle 2 erkennt man den Ausschnitt 13 im Bereich der Meßsohle, die ihrerseits auf der Oberfläche eines Meßobjektes 9 steht. Im Bereich des Ausschnitts 13 erkennt man den Sauger 10 mit Handgriff 11. Eine Feder (nicht sichtbar) hält den Sauger 10 in der angehobenen, inaktiven Ruheposition.

Fig. 3 zeigt den Zustand bei aktiviertem Sauger 10. Dieser hat sich am Meßobjekt 9 festgesaugt. Die Feder, beispielsweise eine Schraubenfeder 12.1, zieht das Gehäuse 1 auf die Unterlage 9. Die Wasserwaage sitzt fest auf dem Meßobjekt 9.

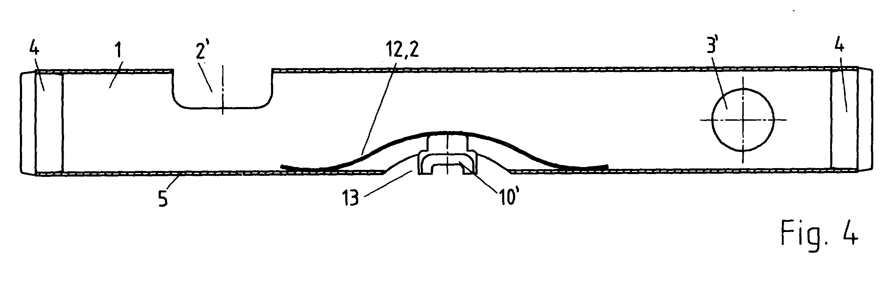

Fig. 4 zeigt als Längsschnitt eine alternative Ausführungsform. Man erkennt das Gehäuse 1 mit Ausschnitten 2', 3' für die Libellen sowie die beiden Endkappen 4. Ein Permanentmagnet 10' sitzt in dem Ausschnitt 13 im Bereich der Meßsohle 5 der Wasserwaage 1. Der Permanentmagnet 10' ist an einer gebogenen Blattfeder 12.2 befestigt, deren Enden sich gegen die Innenseite des Gehäuseprofils 1 abstützen.

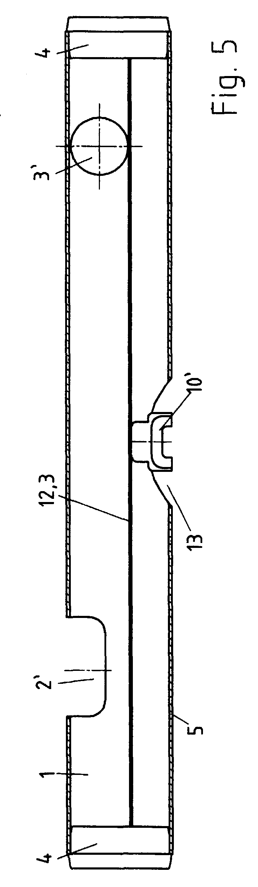

Fig. 5 zeigt als drittes Ausführungsbeispiel die Verwendung einer Balkenfeder 12.3, z. B. in Form eines Stahldrahtes oder eines z. B. faserverstärkten Kunststoffstabes, zur Befestigung des Permanentmagneten 10'. Die Enden der Feder 12.3 sind in den Endkappen 4 gelagert.

Anstelle des Stahldrahtes 12.3 bzw. Kunststoffstabes in Fig. 5 könnte auch eine Gummischnur verwendet werden.

## Patentansprüche

1. Wasserwaage mit einer Vorrichtung zum lösbaren Befestigen derselben an einem Meßobjekt (9), gekennzeichnet durch die Merkmale:
- es ist wenigstens ein Haftkraft erzeugendes, oberflächenschonendes Element (10, 10') vorgesehen,
- das Element (10, 10') ist mittels einer Feder (12) an der Wasserwaage (1) befestigt,
- die Feder (12) positioniert das Element (10, 10') in der Ruheposition mit Abstand zum Meßobjekt (9).

2. Wasserwaage nach Anspruch 1, gekennzeichnet durch das Merkmal:
- die Wasserwaage (1) besitzt einen Ausschnitt (13) für das Element (10, 10').

3. Wasserwaage nach Anspruch 1 oder 2, gekennzeichnet durch die Merkmale:
- dem Element (10, 10') ist ein Handgriff (11) zugeordnet,
- der Handgriff (11) ist von der Außenseite der Wasserwaage (1) zu betätigen.

4. Wasserwaage nach einem der Ansprüche 1 bis 3, gekennzeichnet durch das Merkmal:
- das Element (10, 10') bzw. der Handgriff (11) sind an der Wasserwaage (1) geführt.

5. Wasserwaage nach einem der Ansprüche 1 bis 4, gekennzeichnet durch das Merkmal:
- das Element ist ein Unterdruck-Sauger (10).

6. Wasserwaage nach Anspruch 5, gekennzeichnet durch das Merkmal:
- der Sauger (10) ist ein Hebel-Sauger.

7. Wasserwaage nach einem der Ansprüche 1 bis 4, gekennzeichnet durch das Merkmal:
- das Element ist ein Permanentmagnet (10').

8. Wasserwaage nach einem der Ansprüche 1 bis 7, gekennzeichnet durch das Merkmal:
- die Feder (12) ist eine Blattfeder (12.2).

9. Wasserwaage nach einem der Ansprüche 1 bis 7, gekennzeichnet durch das Merkmal:
- die Feder (12) ist eine Balkenfelder (12.3).

10. Wasserwaage nach einem der Ansprüche 1 bis 7, gekennzeichnet durch das Merkmal:
- die Feder (12) ist eine Schraubenfeder (12.1).

11. Wasserwaage nach einem der Ansprüche 1 bis 10, gekennzeichnet durch das Merkmal:
- die Feder (12) besteht aus Kunststoff.

12. Wasserwaage nach einem der Ansprüche 1 bis 7, gekennzeichnet durch das Merkmal:
- die Feder (12) ist eine Gummischnur.
